# EUROPÄISCHE PATENTSCHRIFT

(11) **EP 1 795 846 B1**
(45) Veröffentlichungstag und Bekanntmachung des Hinweises auf die Patenterteilung: **06.05.2009**
(21) Anmeldenummer: 06025579.1
(22) Anmeldetag: 11.12.2006
(51) Int. Cl.: F28D 7/04

(54) **Wärmetauscher mit einer Mehrzahl von Rohrelementen**
Heat exchanger with a plurality of tube elements
Échangeur de chaleur avec une pluralité d'éléments tubulaires

(30) Priorität: 12.12.2005 DE 102005059667
(43) Veröffentlichungstag der Anmeldung: 13.06.2007
(73) Patentinhaber: Valeo Systèmes Thermiques, 78321 Le Mesnil Saint-Denis (FR)
(72) Erfinder: Obrist, Frank, 6900 Bregenz (AT); Graz, Martin, 6890 Lustenau (AT)
(74) Vertreter: Prinz & Partner

(56) Entgegenhaltungen:
- DE-B1- 1 913 226
- GB-A- 2 316 738
- US-A- 3 058 722
- US-A- 3 323 587
- US-A- 4 380 912
- US-A- 4 883 117

## Beschreibung

Die Erfindung betrifft einen Wärmetauscher zum Wärmetransfer zwischen einem ersten Fluid und einem zweiten Fluid wie im Oberbegriff des Anspruchs 1 beschrieben ist, umfassend einen ersten Einlass-Anschlussverteiler für das erste Fluid und einen ersten Auslass-Anschlussverteiler für das erste Fluid, wobei zwischen dem ersten Einlass-Anschlussverteiler und dem ersten Auslass-Anschlussverteiler eine Mehrzahl von Rohrelementen angeordnet ist, die insbesondere gleichgerichtet von dem ersten Fluid durchströmbar sind, wobei zwischen den Rohrelementen wenigstens ein Hohlraum gebildet ist, der von dem zweiten Fluid durchströmbar ist, wobei die Mehrzahl von Rohrelementen mit wenigstens abschnittsweise veränderlichem Krümmungsradius in der Art einer ersten Spirale um eine Lagerachse gewunden ist. Ein derartiger Wärmetauscher ist z.B. in der US-3058722 gezeigt.

Aus der DE 196 35 454 A1 ist eine Baueinheit mit einem fluidführenden Wärmetauscher für eine Kfz-Klimaanlage mit Kältemittelkreislauf bekannt. Dabei ist ein zentral angeordneter erster Einlass-Anschluss vorgesehen, über den ein erstes Fluid in den Wärmetauscher eingeleitet wird. Über einen ebenso zentral angeordneten zweiten Auslass-Anschluss lässt sich das erste Fluid durch den Sammler-Raum hindurch und aus der Baueinheit heraus transportieren. Der Wärmetauscher umfasst im wesentlichen zwei separate, spiralförmig um eine Lagerachse gewickelte Flachrohre, die axial zueinander versetzt und durch einen Zwischenboden voneinander getrennt im Gehäuse der Baueinheit angeordnet sind. Das heißt, die spiralförmig gewickelten Flachrohre nehmen axial zueinander versetzte und in sich abgeschlossene zylindrische Bauräume ein. Die Fluidführung in den Flachrohren erfolgt von einem radial inneren Ende zu einem radial äußeren Ende des ersten Flachrohrs; über ein sich in axialer Richtung erstreckendes Verbindungsrohr strömt das Fluid in das zweite Flachrohr, in dem es von einem radialen äußeren Ende zu einem radial inneren Ende des zweiten Flachrohrs strömt, von dem aus das Fluid in den Auslass-Anschluss gelangt. Jedes Flachrohr definiert in sich einen spiraligen Außenraum, der von einem zweiten Fluid in entgegengesetzter Richtung durchströmbar ist.

Die gattungsgemäße US 3 058 722 zeigt einen Wärmetauscher mit in einer Doppelspirale gewundenen Rohrleitungen, die von einem zentralen Einlaß zu einem radial außenliegenden Auslaß von einem Fluid durchströmt sind. Dabei sind zwei sich parallel zueinander erstreckende Rohrleitungsstreifen zu einem Kegel aufgewickelt, die jeweils mehrere senkrecht untereinander angeordnete Rohrleitungen aufweisen. Zwischen den Streifen sind Kanäle freigehalten, durch die Luft senkrecht zur Ebene der Spiralen durch die Rohrieitungsstreifen strömt, um das Fluid in den Rohleitungen zu kühlen.

In der US 4 883 117 ist ein Wärmetauscher dargestellt, bei dem Rohrleitungen zu einer in einer Ebene angeordneten Doppelspirale gewunden sind und mehrere solche Spiralen mit Abstand zueinander axial übereinander angeordnet sind. Zwischen den Spiralen sind jeweils zwei wärmeleitende Platten vorgesehen, die einen Strömungsraum für eine Kühlflüssigkeit bilden.

Die US 3 323 587 beschreibt einen Wärmetauscher, der aus einer Blechlage gefertigt wird, die um zwei parallel angeordnete Zu- bzw. Ableitungsrohre in Form einer Doppelspirale aufgewickelt wird. Die Zwischenräume, die zwischen, den einzelnen Abschnitten der Blechlage ausgebildet sind, werden gegenläufig von zu kühlendem Fluid und Kühlflüssigkeit durchströmt. Jeder Zwischenraum ist in axialer Richtung in mehrere Kanäle unterteilt, indem Abstandsdrähte an der Blechlage befestigt sind. Diese werden mit der Blechlage zusammen aufgewickelt, um den Wärmetauscher zu bilden.

Aufgabe der Erfindung ist es, einen Wärmetauscher der eingangs genannten Art bereit zu stellen, der bei besonders kleinem Bauraum eine möglichst hohe Wärmeübertragungsleistung aufweist. Ferner ist es Aufgabe der Erfindung, eine einfachere und kostengünstigere Herstellbarkeit eines Wärmetauschers der eingangs genannten Art zu ermöglichen.

Die Aufgabe wird durch einen Wärmetauscher mit den Merkmalen des Anspruchs 1 gelöst. Dabei ist eine zweite Mehrzahl von Rohrelementen mit wenigstens abschnittsweise veränderlichem Krümmungsradius in der Art einer zweiten Spirale um eine Lagerachse gewunden, wobei die zweite Spirale zur Bildung einer Doppelspirale innerhalb der ersten Spirale angeordnet ist. Das heißt, die erste Spirale und die zweite Spirale nehmen wenigstens abschnittsweise ein gemeinsames, zylindrisches Bauvolumen entlang einer ggf. die Zylinderachse bildenden Lagerachse ein, wodurch sich eine kompakte Bauweise des Wärmetauschers realisieren lässt. Ferner lassen sich Einlass und Auslass des Wärmetauschers vorteilhaft benachbart zueinander und/oder auf einer gemeinsamen Seite des Wärmetauschers oder auf einander gegenüberliegenden Seiten des Wärmetauschers anordnen. In bevorzugter Weise besteht die erste Mehrzahl von Rohrelementen aus lang gestreckten, einzelnen, feinen Röhren, die mit dem ersten Einlass-Anschlussverteiler stoffschlüssig verbunden sind. Weiter bevorzugt ist es, wenn die zweite Mehrzahl von Rohrelementen lang gestreckte, feine Röhren umfasst, die einstückig mit zugeordneten Röhren der ersten Anzahl von Rohrelementen ausgeführt und ebenfalls stoffschlüssig mit dem ersten Auslass-Anschlussverteiler verbunden sind.

In Ausgestaltung der Erfindung erstreckt sich die erste Mehrzahl von Rohrelementen entlang eines Abschnitts einer Lagerachse, wobei sich die zweite Mehrzahl von Rohrelementen in etwa entlang desselben Abschnitts der Lagerachse erstreckt. Auf diese Weise ergibt sich ein großes Volumen-Außenmaß-Verhältnis, wobei eine große Anzahl von Rohrelementen in einem kompakten Gehäuse unterbringen lässt.

Wenigstens einem Rohrelement ist eine Wärmeleitende Lage, insbesondere eine metallische Folie zugeordnet, die in weiterer Ausgestaltung der Erfindung in wärmeleitendem Kontakt mit dem Rohrelement in der Spirale angeordnet ist. Die wärmeleitende Lage erstreckt sich bevorzugt parallel zur Haupterstreckung der ersten Mehrzahl von Rohrelementen und/oder parallel zur Haupterstreckung der zweiten Mehrzahl von Rohrelementen. Die wärmeleitende Lage ist mit dem Rohrelement spiralförmig gewickelt angeordnet. Die wärmeleitende Lage ermöglicht in vorteilhafter Weise insbesondere eine Vergrößerung der dem Rohrelement zuzuordnenden Wärmeübertragungsoberfläche, insbesondere auf Seiten des zweiten Fluids. In besonders bevorzugter Weise ist eine wärmeleitende Lage einer größeren Anzahl von Rohrelementen bzw. Röhren zugeordnet und diese berührend positioniert.

Einer Anzahl von Rohrelementen sind zwei wärmeleitende Lagen, insbesondere zwei metallische Folien zugeordnet, mittels derer der vom zweiten Fluid durchströmte wenigstens eine Hohlraum begrenzt ist. Dadurch ist eine weitere Vergrößerung der den Rohrelementen zuzuordnenden Wärmeübertragungsflächen erreichbar.

In weiterer Ausgestaltung der Erfindung ist wenigstens einem Rohrelement eine nicht-metallische und/oder schlecht wärmeleitende Lage, insbesondere eine Kunststoff-Folie zugeordnet zur thermischen Isolierung des Rohrelements und/oder einer zugeordneten wärmeleitenden Lage von einem benachbarten Rohrelement und/oder einer benachbarten wärmeleitenden Lage. Eine derartige nicht-metallische und/oder schlecht wärmeleitende Lage erstreckt sich bevorzugt entlang der Haupterstreckung des Rohrelements und ist weiter bevorzugt mit dem Rohrelement spiralförmig gewickelt. Optional können einem Rohrelement oder einer Mehrzahl von Rohrelementen mehrere nicht-metallische und/oder schlecht wärmeleitende Lagen zugeordnet sein. Zwischen zwei benachbarten nicht-metallischen und/oder schlecht wärmeleitenden Lagen kann ebenso wie zwischen nicht-metallischen und metallischen Lagen ein Luftspalt, Fügematerial, Füllmaterial oder Abstandshalter vorgesehen sein.

In weiterer Ausgestaltung der Erfindung sind ein zweiter Einlass-Anschlussverteiler für das zweite Fluid und ein zweiter Auslass-Anschlussverteiler für das zweite Fluid vorgesehen, die mit einer Mehrzahl von vom zweiten Fluid durchströmbaren Hohlräumen kommunizieren. Der zweite Einlass-Anschlussverteiler und der zweite Auslass-Anschlussverteiler ermöglichen so eine Verteilung des zweiten Fluids auf die zwischen den Rohrelementen und/oder zwischen metallischen Lagen gebildeten Hohlräume, wobei beide Anschlussverteiler sich in bevorzugter Weise parallel zu einer Lagerachse erstrecken. Mit Vorteil sind beide Anschlussverteiler außerhalb eines gemeinsamen, zylindrischen Bauvolumens der ersten Spirale und der zweiten Spirale angeordnet, so dass eine Zu- und Ableitung des zweiten Fluids an entlang einer (gedachten) Mantelfläche der ersten Spirale und/oder der zweiten Spirale zueinander versetzten Positionen ermöglicht ist.

In weiterer Ausgestaltung der Erfindung sind wenigstens ein Einlass-Anschlussverteiler und/oder wenigstens ein Auslass-Anschlussverteiler, insbesondere der zweite Einlass-Anschlussverteiler und der zweite Auslass-Anschlussverteiler als unrunde Strangpressprofile ausgeführt. Auf diese Weise lässt sich ein Anschlussverteiler besonders einfach herstellen, wobei mehrere, parallel zueinander verlaufende Kanäle zur getrennten Leitung des jeweiligen Fluids vorsehbar sind. Ferner sind die mehreren Kanäle an in Umfangsrichtung und/oder in Axialrichtung des Strangpressprofils zueinander versetzten Stellen anzapfbar zu gestalten.

In weiterer Ausgestaltung der Erfindung sind die erste Spirale und/oder die zweite Spirale um eine zentrale Halterung mit insbesondere zwei voneinander beabstandeten Lagerachsen gewunden. Mit Hilfe der zentralen Halterung lassen sich die erste Spirale und/oder die zweite Spirale parallel zur jeweiligen Lagerachse mit einer Kraft beaufschlagen, so dass die Spiralen und die gebildete Doppelspirale in axialer Richtung vorteilhaft fixierbar sind. Zwischen den Lagerachsen ist ein Übergangsbereich von der ersten Mehrzahl von Rohrelementen zu der zweiten Mehrzahl von Rohrelementen vorgesehen. In dem Übergangsbereich sind Rohrelemente der ersten Spirale mit solchen der zweiten Spirale verbindbar. Ferner lässt sich mit Hilfe zweier starr miteinander zu einer Halterung verbundener Lagerachsen durch Einsetzen der ersten Mehrzahl von Rohrelementen und/oder der zweiten Mehrzahl von Rohrelementen zwischen die Lagerachsen und anschließendes Drehen der Halterung um die eigene Achse auf besonders einfache Weise eine Spirale und auch eine Doppelspirale erzeugen.

In weiterer Ausgestaltung der Erfindung sind der erste Einlass-Anschlussverteiler und der erste Auslass-Anschlussverteiler an einander gegenüberliegenden Stellen der Doppelspirale positioniert, wobei die zur Doppelspirale gewundenen Rohrelemente in der Form einer Arena gewickelt sind. Die Anschlussverteiler erstrecken sich dabei bevorzugt parallel zur Lagerachse der Doppelspirale und entlang der Mantelfläche des gemeinsamen zylindrischen Bauvolumens der Spiralen im Bereich der übereinander liegenden, näherungsweise geradlinigen Abschnitte der Rohrelemente. Auf diese Weise kann quer zur den Lagerachsen der Spiralen eine Kraft auf die Rohrelemente aufgebracht werden. Ferner kann auf diese Weise dem Wärmetauscher ein kreiszylindrisches Hüllvolumen mit einem besonders kleinen Durchmesser zugeordnet werden.

In weiterer Ausgestaltung der Erfindung sind die zur Doppelspirale gewundenen Rohrelemente mit einem Bodenelement und einem Deckelelement zu einer Baueinheit zusammengefasst und in ein wenigstens abschnittsweise zylindrisches Gehäuse eingesetzt. So ergibt sich eine insgesamt kompakte und formstabile Bauweise des Wärmetauschers, wobei das zylindrische Gehäuse in etwa ein kreiszylindrisches Hüllvolumen für den Wärmetauscher bieten kann. Im Bereich der zentralen Halterung kann eine Kraftübertragung zwischen Bodenelement und Deckelelement vorgesehen sein.

In weiterer Ausgestaltung der Erfindung ist den zur Doppelspirale gewundenen Rohrelementen ein wenigstens abschnittsweise zylindrisches Gehäuse zugeordnet, in dem zusätzlich ein Gas-Flüssigkeitsabscheider und/oder ein Sammler für das erste Fluid und/oder das zweite Fluid angeordnet ist, wobei das erste Fluid und/oder das zweite Fluid insbesondere als Mehrphasengemisch eines chemisch näherungsweise reinen Mediums ausführbar ist. Ein Gas-Flüssigkeitsabscheider und/oder ein Sammler bewirkt oder unterstützt in bevorzugter Weise eine Phasentrennung bei einem Mehrphasengemisch, so dass sichergestellt ist, dass als ein den Abscheider bzw. Sammler verlassendes Fluid einphasig, insbesondere gasförmig ist. Zur Erzielung optimaler Wärmetransferleistungen ist ein Wärmetauscher daher unmittelbar an einen Auslass des Abscheiders bzw. Sammlers anzuschließen und in besonders bevorzugter Weise mit einem Abscheider bzw. Sammler bautechnisch zu vereinigen. Eine solche Vereinigung gelingt insbesondere dann besonders gut, wenn die Bauraumkonfigurationen wie erfindungsgemäß vorgeschlagen harmonieren.

Weitere Merkmale und Merkmalskombinationen ergeben sich aus der nachfolgenden Beschreibung, in der bevorzugte Ausführungsbeispiele der Erfindung anhand der Zeichnungen dargestellt sind.

Hierzu zeigen
- Fig. 1: in einer schematischen Darstellung einen Kältemittelkreislauf einer Kraftfahrzeug-Klimaanlage mit einer erfindungsgemäßen Wärmetauscher-Sammler-Kombination,
- Fig. 2: einen ersten Längsschnitt durch eine erfindungsgemäße Wärmetauscher-Sammler-Kombination,
- Fig. 3: einen zweiten Längsschnitt durch die Wärmetauscher-Sammler-Kombination gemäß Fig. 2,
- Fig. 4: in einer vereinfachten perspektivischen Darstellung eine Ansicht von oben auf einen erfindungsgemäßen Wärmetauscher,
- Fig. 5: in einer vereinfachten perspektivischen Darstellung eine Ansicht von unten auf den Wärmetauscher gemäß Fig. 4 sowie
- Fig. 6a und 6b: in einer Detailansicht jeweils einen Schnitt durch den Wärmetauscher gemäß Fig. 4.

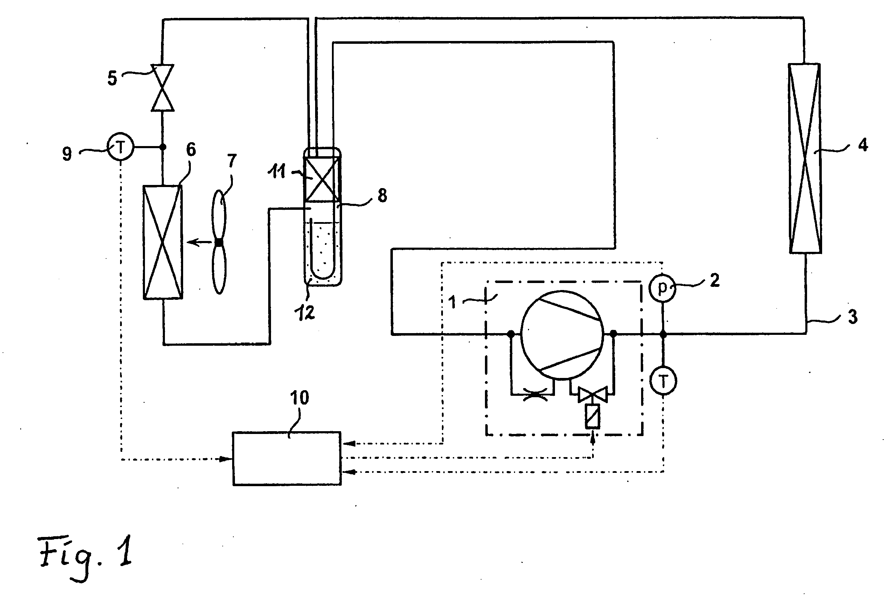

In einem Kältemittelkreislauf einer Kraftfahrzeugklimaanlage (vgl. Fig. 1), in dem ein Fluid in Form eines zumindest abschnittsweise gasförmigen Kältemittels (beispielsweise CO₂ bzw. R744) umgewälzt wird, ist ein Kältemittelkompressor 1 vorgesehen. Der Kältemittelkompressor 1 ist in bevorzugter Weise als Hubkolbenkompressor mit einer Mehrzahl von Verdichtungszylindern ausgeführt, in denen mit Hilfe translatorisch beweglicher Kolben das an dieser Stelle des Kreislaufs gasförmige Kältemittel verdichtet und nachfolgend (als im folgenden "erstes Fluid" genanntes) hochkomprimiertes Kältemittel in einen Druckraum ausgestoßen wird. Dem Kältemittelkompressor 1 ist im Bereich seines Druckraumes ein kombinierter Druck-Temperatur-Sensor 2 zugeordnet, der mit einer Leistungsregelungseinheit 10 des Kältemittelkreislaufes gekoppelt ist. Über eine Hochdruckleitung 3 wird das erste Fluid zu einem ersten Wärmetauscher 4 (Gaskühler) gefördert, in dem es Wärme an ein externes Medium, insbesondere Umgebungsluft abgibt.

Über eine weitere Hochdruckleitung 3 gelangt das hochkomprimierte, im ersten Wärmetauscher 4 abgekühlte erste Fluid zu einer Wärmetauscher-Sammler-Kombination 8, die einen zweiten Wärmetauscher 11 umfasst, der als innerer Wärmetauscher in den Kältemittelkreislauf 1 geschaltet ist. In diesem zweiten Wärmetauscher 11 wird das erste Fluid weiter abgekühlt, wobei das erste Fluid seine Wärme an das niederdruckseitige gasförmige Kältemittel abgibt (nachfolgend "zweites Fluid" genannt).

Über ein Expansionsorgan 5 (Drossel) wird das erste Fluid entspannt und verflüssigt und in den Niederdruck-Zustand des zweiten Fluids übergeführt. Über einen Temperatur-Sensor 9 wird der Zustand des Kältemittels überwacht bevor es in einen als Verdampfer arbeitenden dritten Wärmetauscher 6 gelangt. Im Verdampfer 6 wird dem Kältemittel mit Hilfe des Verdampfergebläses 7 aus der Innenraumzuluft des Kraftfahrzeugs heraus Wärme zugeführt, wobei die Innenraumzuluft abgekühlt wird. Das solchermaßen verdampfte Kältemittel (zweites Fluid) wird als Sattdampf der Wärmetauscher-Sammler-Kombination 8 zugeführt, in der ein Sammler 12 ein Abscheiden und Zwischenspeichern der Flüssiganteile aus dem zweiten Fluid bewirkt. Bei entsprechendem Bedarf saugt der Kältemittelkompressor 1 das zweite Fluid aus dem Sammler 12 ab, wobei es (wie bereits erwähnt) in den zweiten Wärmetauscher 11 gelangt, in dem es mit Hilfe von aus dem ersten Fluid abgezogener Wärme überhitzt wird. Das somit konditionierte zweite Fluid wird nachfolgend erneut vom Kältemittelkompressor 1 verdichtet und in den Hochdruck-Zustand des ersten Fluids übergeführt, womit der Kreislauf erneut beginnt.

Der Kältemittelkreislauf wird gemäß Fig. 1 als Kälteanlage betrieben, kann jedoch mit kleinen Modifikationen in an sich bekannter Weise auch als Wärmepumpe genutzt werden.

Im folgenden wird vertieft auf die Wärmetauscher-Sammler-Kombination 8 eingegangen, deren grundlegende Funktionsweise und deren Einbindung in den Kältemittel-Kreislauf einer Kfz-Klimaanlage bereits in der Offenlegungsschrift DE 196 35 454 A1 dargestellt und erläutert ist, auf die hiermit explizit Bezug genommen wird.

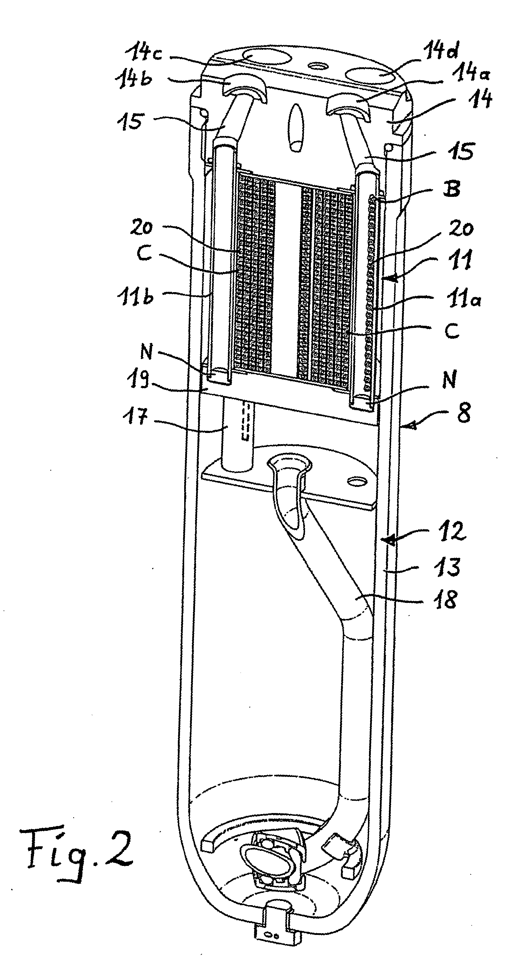

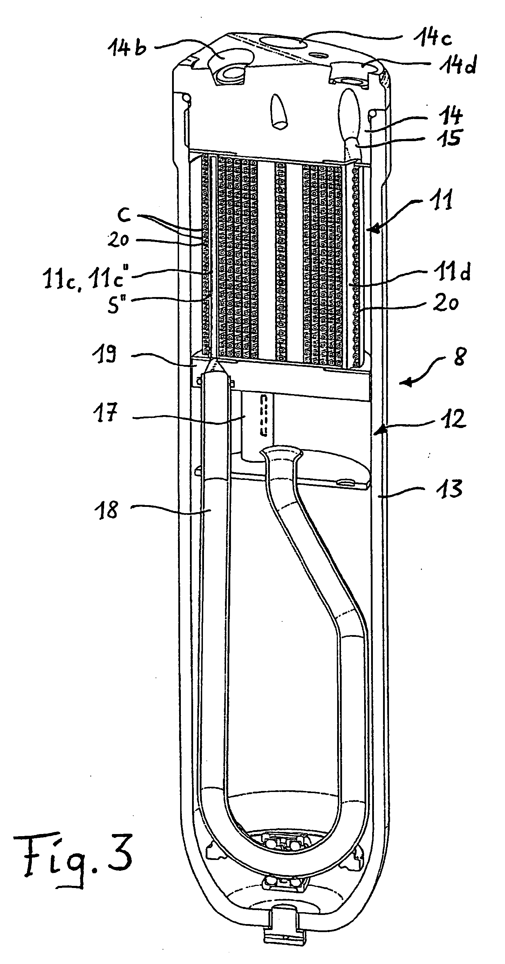

Die Wärmetauscher-Sammler-Kombination 8 umfasst zwei an sich getrennte Funktionseinheiten, den zweiten Wärmetauscher 11 und den Sammler 12, die in einem gemeinsamen Gehäuse 13 angeordnet sind (vgl. Fig. 2 und Fig. 3). Dabei versteht es sich von selbst, dass diese alternativ auch in gesonderten Gehäusen mit entsprechender Leitungsverbindung untergebracht sein können. Hinsichtlich der Darlegung eines bevorzugten Beispiels eines Sammlers, der insbesondere auch für das Kältemittel R744 verwendbar ist, wird auf die Offenlegungsschrift DE 100 58 513 A1 verwiesen. Aufbau und Wirkungsprinzip lassen sich ebenso wie die konkrete Führung und Speicherung des Kältemittels auf das vorliegende Ausführungsbeispiel gemäß den Fig. 2 und 3 anwenden. Der in der Offenlegungsschrift DE 100 58 513 A1 beschriebene Sammler ist somit in der erfindungsgemäßen Wärmetauscher-Sammler-Kombination 8 mit einem nachfolgend beschriebenen erfindungsgemäßen Wärmetauscher 11 zu kombinieren.

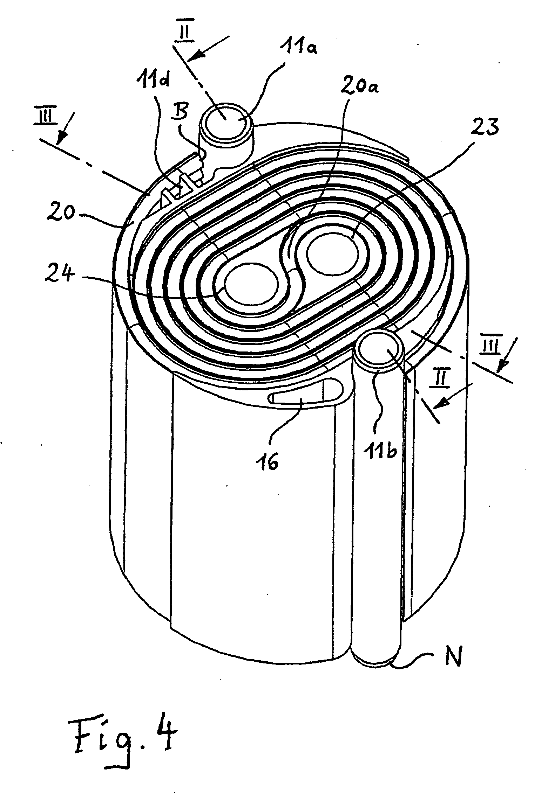

In Fig. 2 ist ein erster Längsschnitt durch die Wärmetauscher-Sammler-Kombination 8 im Detail dargestellt. Der Schnitt gemäß Fig. 2 schneidet dabei den Wärmetauscher 11 gemäß Fig. 4 in Richtung der Linie II-II. In Fig. 3 ist ein zweiter Längsschnitt durch die Wärmetauscher-Sammler-Kombination 8 im Detail dargestellt. Dabei ist ersichtlich, dass die gesamte Baueinheit in einem lang gestreckten, topfförmigen Gehäuse 13 mit in etwa kreisförmigem Innenquerschnitt untergebracht ist. Die Gesamtlänge des Gehäuses 13 beträgt in etwa das 4- bis 5-fache seines Außendurchmessers, wodurch sich eine Gestalt ergibt, die sich günstigerweise für einen Einbau in einen Motorraum eines Kraftfahrzeuges eignet, in dem insbesondere ein mit einem Luft-Wasser-Motorkühler fluchtender Bauraum vorgesehen ist.

Wie dargestellt eignet sich die Wärmetauscher-Sammler-Kombination 8 insbesondere zu einem vertikalen Einbau, wobei sich eine Hauptachse (längste Erstreckung) des Gehäuses 13 senkrecht bzw. lotrecht erstreckt und in seinem unteren Bereich der Sammler 12 vorgesehen ist, der über einen Zwischenboden 19 vom Wärmetauscher 12 abgetrennt ist. Oberseitig ist das Gehäuse mittels einer Deckeleinheit 14 verschlossen, wobei in der Deckeleinheit 14 insbesondere ein erster Einlass 14a sowie ein erster Auslass 14b und ein zweiter Einlass 14c sowie ein zweiter Auslass 14d mit zugehörigen Transferkanälen 15 vorgesehen sind.

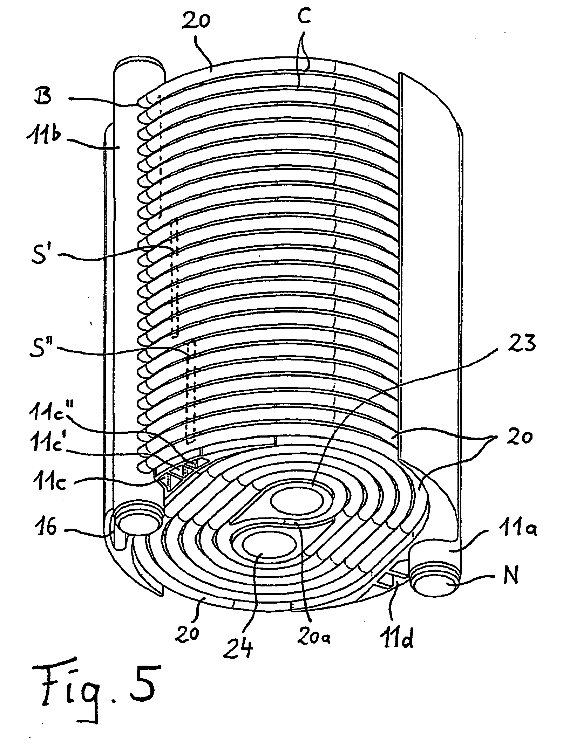

Zweiter Einlass 14c und zweiter Auslass 14d sind (niederdruckseitig) verbunden mit dem Sammler 12, wie insbesondere aus Fig. 3 ersichtlich ist. Der Schnitt gemäß Fig. 3 schneidet dabei den Wärmetauscher 11 gemäß Fig. 4 in Richtung der Linie III-III. Der zweite Einlass 14c ist über einen Transferkanal verbunden mit einem durchströmbaren Hohlprofil 16 (vgl. Fig. 4 und 5), über welches das zweite Fluid am Wärmetauscher 11 vorbeigeführt wird, und mündet in ein Zulaufrohr 17 des Sammlers 12. Wie bereits erwähnt, gelangt das zweite Fluid vom Verdampfer 6 aus in den zweiten Einlass 14c und somit in den Sammler 12, in dem es wie bereits in der Offenlegungsschrift DE 100 58 513 A1 beschrieben behandelt wird.

Über ein U-förmig gebogenes Abzugsrohr 18 ist das zweite Fluid aus dem Sammler 12 entnehmbar, wobei das Abzugsrohr 18 im Bereich des als Bodenelement des Wärmetauschers dienenden Zwischenbodens 19 mit einem so genannten zweiten Einlass-Anschlussverteiler 11c des Wärmetauschers 11 gekoppelt ist. Nach einer Durchströmung des Wärmetauschers 11 und einem damit verbundenen Wärmetransfer gelangt das zweite Fluid in einen so genannten zweiten Auslass-Anschlussverteiler 11d und von dort aus über einen Transferkanal 15 zum zweiten Auslass 14d. Nachfolgend wird das zweite Fluid in bevorzugter Weise dem Kompressor 1 zugeführt.

Erster Einlass 14a und erster Auslass 14b sind (hochdruckseitig) verbunden mit einem ersten Einlass-Anschlussverteiler 11a sowie mit einem ersten Auslass-Anschlussverteiler 11b, wobei die genannten Anschlussverteiler 11a, 11b zum Wärmetauscher 11 gehören und eine Zu- und Ableitung des ersten Fluids ermöglichen (vgl. Fig. 2).

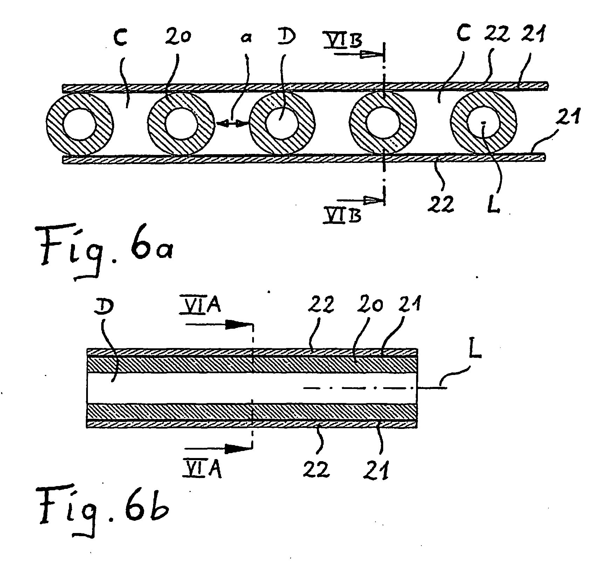

Eine detaillierte Erläuterung des Aufbaus des Wärmetauschers 11 erfolgt insbesondere anhand der Fig. 4 bis 6.

Der erste Einlass-Anschlussverteiler 11a ist ebenso wie der erste Auslass-Anschlussverteiler 11b näherungsweise als lang gestreckter Hohlzylinder ausgebildet und an seiner Unterseite mittels eines Stopfens N dicht verschlossen.

Zwischen dem ersten Einlass-Anschlussverteiler 11a und dem ersten Auslass-Anschlussverteiler 11b ist eine Mehrzahl von vierundzwanzig Rohrelementen 20 angeordnet, die als einzelne feine, in etwa kreiszylindrische Röhren aus einer AlMgSi-Legierung ausgeführt sind. In den Röhren sind Strömungskanäle D für das erste Fluid gebildet. In einer bevorzugten Ausführungsform weisen die Röhren einen Außendurchmesser von ca. 2 mm sowie eine Wandstärke von 0,5 mm auf. Die Rohrelemente sind in axialer Richtung übereinander mit einem einheitlichen Abstand a parallel zueinander ausgerichtet angeordnet und einerseits am Einlass-Anschlussverteiler 11a befestigt. Hierzu sind am Einlass-Anschlussverteiler 11a Anschlussbohrungen B vorgesehen, durch die die Rohrelemente 20 hindurchgesteckt werden können und mit denen die Rohrelemente beispielsweise durch Löten stoffschlüssig verbunden sein können. In bevorzugter Weise sind dieselben Rohrelemente 20 im Bereich von Bohrungen B auch am Auslass-Anschlussverteiler 11b festgelegt. Folglich sind die Rohrelemente 20 strömungstechnisch parallel geschaltet und gleichgerichtet vom ersten Fluid durchströmbar, wobei zwischen den Rohrelementen Hohlräume C gebildet sind, die von dem zweiten Fluid durchströmbar sind.

Den Rohrelementen 20 sind Wärmeleitende Lagen in Form zweier metallischer Folien 21 zugeordnet. Die Folien 21 befinden sich unverbunden in Wärmeleitendem Kontakt mit den Rohrelementen 20 und erstrecken sich parallel zu der Mehrzahl von Rohrelementen in Richtung derer Längsachsen L. Die Folien 21 vergrößern somit die Wärmeübertragungsfläche auf Seiten des zweiten Fluids und sie begrenzen die vom zweiten Fluid durchströmbaren Hohlräume C. In einem modifizierten Ausführungsbeispiel sind die metallischen Folien punktuell oder entlang der Berührfläche mit den Rohrelementen verbunden und/oder einstückig mit diesen ausgeführt. In einem weiteren modifizierten Ausführungsbeispiel sind Rohrelemente und eine oder zwei metallische Lagen zu einem Hohlprofil zusammengefasst.

Auf den den Rohrelementen 20 abgewandten Seiten der Folien 21 sind zwei wenig Wärmeleitende, nicht-metallische Lagen in Form von Gummi- oder Kunststoff-Folien 22 vorgesehen. Im vorliegenden Ausführungsbeispiel sind die isolierenden Folienlagen aus einer Silikon-Verbindung hergestellt. Die Kunststoff-Folien 22 dienen in bevorzugter Weise zur Wärmeisolierung der Rohrelemente 20 und der Hohlräume C gegen die Umgebung und gegen (radial) benachbarte Rohrelemente. In der Darstellung gemäß Fig. 5 sind die Folien 21, 22 der besseren Übersicht halber weggelassen.

Zur Herstellung wird die Mehrzahl von Rohrelementen 20 (nach einem Fügen mit dem ersten Einlass-Anschlussverteiler) samt metallischer Folien 21 und Kunststoff-Folien 22 in einem lang gestreckten Zustand zwischen zwei Lagerachsen 23, 24 hindurchgeführt, wobei die Lagerachsen 23, 24 im wesentlichen starr miteinander verbunden sind und so eine zentrale Halterung bilden. Durch mehrmalige Rotation der zentralen Halterung 23, 24 um eine Drehachse, die idealerweise mittig zwischen den Lagerachsen positioniert ist, ergibt sich die in den Fig. 4 und 5 dargestellt Wicklung der Rohrelemente 20 samt Folien 21, 22 um die zentrale Halterung. Dabei ist die Mehrzahl von Rohrelementen mit gemeinsamen, parallel zu einer Lagerachse orientierten Tangentialebenen ausgerichtet, wobei die Folien 21, 22 entlang dieser Tangentialebenen angeordnet sind.

Dabei ist nun eine Doppelspirale gebildet, bei der die Rohrelemente 20 samt Folien 21, 22 zunächst ausgehend vom Einlass-Anschlussverteiler 11a mit kleiner werdendem Krümmungsradius mehrmals um die Lagerachsen herum spiralförmig gewunden sind. Im Zentrum der Doppelspirale im Bereich der Halterung 23, 24 ist eine Umkehrformation 20a gebildet, so dass sich im weiteren Verlauf der Rohrelemente 20 mit radial nach außen hin zunehmendem Krümmungsradius eine zweite Spirale ergibt, die zwischen den Windungen der ersten Spirale, das heißt näherungsweise vollständig innerhalb der ersten Spirale zu liegen kommt. In einem modifizierten Ausführungsbeispiel sind im Bereich der Umkehrformation Fügestellen zwischen mehreren Rohrelementen bzw. zwischen einer ersten Mehrzahl von Rohrelementen und einer zweiten Mehrzahl von Rohrelementen vorgesehen. In einem weiteren modifizierten Ausführungsbeispiel ist im Bereich der Umkehrformation ein weiterer Anschlussverteiler für das erste und/oder das zweite Fluid vorgesehen, der mit einer ersten Mehrzahl und einer zweiten Mehrzahl von Rohrelementen verbunden sein kann.

Beide Spiralen nehmen in bevorzugter Weise ein gemeinsames, einheitliches, sich axial entlang der Halterung bzw. der Lagerachsen 23, 24 erstreckendes Bauvolumen ein, um die Doppelspirale zu bilden. Bevorzugt ist hierbei eine Führung und Positionierung der Rohrelemente 20 entlang der Bahn einer Arena, so dass sich im Bereich der geradlinigen Verläufe axial benachbarter Rohrelemente 20 Räume ergeben, in denen die Einlass- und Auslass-Anschlussverteiler 11a, 11b, 11c, 11d angeordnet sein können, und sich eine besonders kompakte Bauweise realisieren lässt, wobei der Wärmetauscher 11 in einem minimalen zylindrischen Hüllvolumen (i.e. Gehäuse 13) untergebracht werden kann. Der minimale Durchmesser des Hüllvolumens bestimmt sich demnach anhand der maximalen Querschnittsabmessungen der Doppelspirale, wobei die axiale Abmessung der Doppelspirale in etwa der minimalen Länge des Hüllvolumens entspricht.

Eine hochdruckseitige Zufuhr des ersten Fluids in die Rohrelemente 20 erfolgt, wie bereits erwähnt, über den ersten Einlass-Anschlussverteiler 11a, der an seiner oberen Stirnseite mit dem ersten Einlass 14a verbunden ist. Entsprechendes gilt für den ersten Auslass-Anschlussverteiler 11b, der mit dem Auslass 14b verbunden ist, über den die hochdruckseitige Abfuhr des ersten Fluids erfolgt. In einem modifizierten Ausführungsbeispiel sind erster Einlass-Anschlussverteiler und erster Auslass-Anschlussverteiler analog zum zweiten Einlass-Anschlussverteiler als Mehrkammer-Strangpressprofile ausgeführt.

Eine niederdruckseitige Zufuhr des zweiten Fluids in die Hohlräume C erfolgt über einen zweiten Einlass-Anschlussverteiler 11c, der in Form eines unrunden, an den Raum zwischen Doppelspirale, erstem Auslass-Anschlussverteiler 11b und minimalem zylindrischem Hüllvolumen angepassten Strangpressprofils ausgeführt ist. Dabei weist der zweite Einlass-Anschlussverteiler 11c mehrere, sich in axialer Richtung erstreckende Kammern 11c', 11c'' auf, denen gegeneinander versetzte Zufuhröffnungen S', S" zugeordnet sind. Über die Zufuhröffnungen S', S" ist jeweils ein Anteil des aus dem Sammler 12 in den Wärmetauscher 11 abgezogenen zweiten Fluids einer Gruppe von durchströmbaren Hohlräumen C zuzuführen.

Eine Abfuhr des zweiten Fluids aus dem Wärmetauscher erfolgt über den zweiten Auslass-Anschlussverteiler 11d, dessen in Fig. 5 sichtbare unterseitige Öffnung mittels des Zwischenbodens 19 verschließbar ist. Ansonsten gleicht der zweite Auslass-Anschlussverteiler 11d im wesentlichen dem zweiten Einlass-Anschlussverteiler 11c hinsichtlich Formgebung und Einpassung in das zylindrische Hüllvolumen. Wie sich aus Fig. 3 ergibt, mündet der zweite Auslass-Anschlussverteiler 11d über einen Transferkanal 15 in den zweiten Auslass 14d.

Deckeleinheit 14 und Zwischenboden 19 sind in bevorzugter Weise miteinander verschraubbar, wobei Schraubenelemente insbesondere im Bereich der zentralen Halterung 23, 24 durch den Wärmetauscher 11 hindurchgeführt sind. Damit können die Anschlussverteiler 11a, 11b, 11c, 11d jeweils formschlüssig an der Deckeleinheit 14 und am Zwischenboden 19 festgelegt sein und in axialer Richtung unter eine gewisse Montagespannung gesetzt werden. Die Doppelspirale bzw. der gesamte Wärmetauscher 11 ist somit einschließlich aller Anschlüsse als kompakte, homogene Baueinheit herstellbar, transportierbar und in das Gehäuse 13 einsetzbar gestaltet.

Der oben beschriebene Wärmetauscher eignet sich zum Platz sparenden Einsatz in jeder Art von Kältemittelkreislauf, wobei sich der Wärmetauscher besonders auszeichnet durch hohe Wärmeübertragungsleistungen bei geringem Gewicht und geringem Bauvolumen. Ferner ist eine kostengünstige Herstellung durch eine geringe Anzahl von Bauteilen und eine geringe Anzahl von Fügevorgängen sichergestellt.

## Patentansprüche

1. Wärmetauscher zum Wärmetransfer zwischen einem ersten Fluid und einem zweiten Fluid, umfassend
- einen ersten Einlass-Anschlussverteiler (11a) für das erste Fluid und
- einen ersten Auslass-Anschlussverteiler (11b) für das erste Fluid, wobei
- zwischen dem ersten Einlass-Anschlussverteiler (11a) und dem ersten Auslass-Anschlussverteiler (11b) eine Mehrzahl von Rohrelementen (20) angeordnet ist, die in axialer Richtung übereinander angeordnet sind und die insbesondere gleichgerichtet oder parallel geschaltet von dem ersten Fluid durchströmbar sind, wobei
- eine erste Mehrzahl von Rohrelementen (20) mit wenigstens abschnittsweise veränderlichem Krümmungsradius in der Art einer ersten Spirale um eine Lagerachse (23, 24) gewunden ist, und
- eine zweite Mehrzahl von Rohrelementen (20) mit wenigstens abschnittsweise veränderlichem Krümmungsradius in der Art einer zweiten Spirale um eine Lagerachse (23, 24) gewunden ist, wobei
- die zweite Spirale zur Bildung einer Doppelspirale innerhalb der ersten Spirale angeordnet ist,
**dadurch gekennzeichnet, dass**
- in axialer Richtung zwischen den Rohrelementen (20) wenigstens ein Hohlraum (C) gebildet ist, der von dem zweiten Fluid durchströmbar ist, wobei
- einer Anzahl von Rohrelementen (20) zwei wärmeleitende Lagen (21) zugeordnet sind, mittels derer der vom zweiten Fluid durchströmte wenigstens eine Hohlraum (C) begrenzt ist,
- wobei die wärmeleitenden Lagen (21) mit den Rohrelementen (20) spiralförmig gewickelt angeordnet sind.

2. Wärmetauscher nach Anspruch 1, **dadurch gekennzeichnet, dass** sich die erste Mehrzahl von Rohrelementen (20) entlang eines Abschnitts einer Lagerachse (23, 24) erstreckt, wobei sich die zweite Mehrzahl von Rohrelementen (20) in etwa entlang desselben Abschnitts der Lagerachse (23, 24) erstreckt.

3. Wärmetauscher nach einem der Ansprüche 1 oder 2, **dadurch gekennzeichnet, dass** eine wärmeleitende Lage (21), insbesondere eine metallische Folie, wenigstens einem Rohrelement (20) zugeordnet ist, wobei die wärmeleitende Lage (21) in wärmeleitendem Kontakt mit dem Rohrelement (20) in der Spirale angeordnet ist

4. Wärmetauscher nach einem der Ansprüche 1 bis 3, **dadurch gekennzeichnet, dass** wenigstens einem Rohrelement (20) eine nicht-metallische und/oder schlecht wärmeleitende Lage (22), insbesondere eine Kunststofl-Folie zugeordnet ist zur thermischen Isolierung des Rohrelements (20) und/oder einer zugeordneten wärmeleitenden Lage (21) von einem benachbarten Rohrelement und/oder einer benachbarten wärmeleitenden Lauge.

5. Wärmetauscher nach einem der Ansprüche 1 bis 4, **dadurch gekennzeichnet, dass** ein zweiter Einlass-Anschlussverteiler (11c) für das zweite Fluid und ein zweiter Auslass-Anschlussverteiler (11d) für das zweite Fluid vorgesehen sind, die mit einer Mehrzahl von vom zweiten Fluid durchströmbaren Hohlräumen (C) kommunizieren.

6. Wärmetauscher nach einem der Ansprüche 1 bis 5, **dadurch gekennzeichnet, dass** wenigstens ein Einlass-Anschlussverteiler (11a, 11c) und/oder wenigstens ein Auslass-Anschlussverteiler (11b, 11d), insbesondere der zweite Einlass-Anschlussverteiler (11c) und der zweite Auslass-Anschlussverteiler (11d) als unrunde Strangpressprofile ausgeführt sind.

7. Wärmetauscher nach einem der Ansprüche 1 bis 6, **dadurch gekennzeichnet, dass** die erste Spirale und/oder die zweite Spirale um eine zentrale Halterung mit insbesondere zwei voneinander beabstandeten Lagerachsen (23, 24) gewunden sind.

8. Wärmetauscher nach einem der Ansprüche 1 bis 7, **dadurch gekennzeichnet, dass** der erste Einlaas-Anachlussverteiler (11a) und der erste Auslass-Anschlussverteiler (11b) an einander gegenüberliegenden Stellen der Doppelspirale positioniert sind, wobei die zur Doppelspirate gewundenen Röhrelemente (20) in der Form einer Arena gewickelt sind.

9. Wärmetauscher nach einem der Ansprüche 1 bis 8, **dadurch gekennzeichnet, dass** die zur Doppelspirale gewundenen Rohrelemente (20) mit einem Bodenelement (19) und einem Deckelelement (14) zu einer Baueinheit zusammengefaßt und in ein wenigstens abschnittsweise zylindrisches Gehäuse (13) eingesetzt sind.

10. Wärmetauscher nach einem der Ansprüche 1 bis 9, **dadurch gekennzeichnet, dass** den zur Doppelspirale gewundenen Rohrelementen (20) ein wenigstens abschnittsweise zylindrisches Gehäuse (13) zugeordnet ist, in dem zusätzlich ein Gas-Flosslgkeitsabschelder und/oder ein Sammler (12) für das erste Fluid und/oder das zweite Fluid angeordnet ist, wobei das erste Fluid und/oder das zweite Fluid insbesondere als Mehrphasengemisch eines chemisch näherungsweise reinen Mediums ausführbar ist.

## Claims

1. A heat exchanger for heat transfer between a first fluid and a second fluid, comprising
- a first inlet insert (11 a) for the first fluid, and
- a first outlet insert (11 b) for the first fluid,
- a plurality of tube elements (20) being arranged between the first inlet insert (11 a) and the first outlet insert (11 b), the tube elements (20) being arranged on top of each other in the axial direction and being more particularly arranged for flow in the same direction or connected in parallel so as to allow the first fluid to flow through them,
- a first plurality of tube elements (20) having a radius of curvature that is variable at least in sections being wound around a bearing shaft (23, 24) in the nature of a first spiral, and
- a second plurality of tube elements (20) having a radius of curvature that is variable at least in sections being wound around a bearing shaft (23, 24) in the nature of a second spiral,
- the second spiral being arranged inside the first spiral to form a double spiral,
**characterized in that**
- at least one cavity (C) is formed in the axial direction between the tube elements (20) and is adapted for the second fluid to flow through it,
- a number of tube elements (20) having two heat conducting layers (21) assigned to them, by means of which the at least one cavity (C), through which the second fluid flows, is delimited,
- the heat conducting layers (21) being arranged spirally wound with the tube elements (20).

2. The heat exchanger according to claim 1, **characterized in that** the first plurality of tube elements (20) extends along a section of a bearing shaft (23, 24), the second plurality of tube elements (20) extending roughly along the same section of the bearing shaft (23, 24).

3. The heat exchanger according to either of claims 1 and 2, **characterized in that** a heat conducting layer (21), in particular a metallic foil, is assigned to at least one tube element (20), the heat conducting layer (21) being arranged in the spiral in heat conducting contact with the tube element (20).

4. The heat exchanger according to any of claims 1 to 3, **characterized in that** at least one tube element (20) has a nonmetallic and/or poorly heat conducting layer (22), in particular a plastic film, assigned to it for thermal insulation of the tube element (20) and/or an assigned heat conducting layer (21) from an adjacent tube element and/or an adjacent heat conducting layer.

5. The heat exchanger according to any of claims 1 to 4, **characterized in that** a second inlet insert (11c) for the second fluid and a second outlet insert (11d) for the second fluid are provided, which communicate with a plurality of cavities (C) that are adapted for the second fluid to flow through them.

6. The heat exchanger according to any of claims 1 to 5, **characterized in that** at least one inlet insert (11a, 11c) and/or at least one outlet insert (11 b, 11 d), in particular the second inlet insert (11c) and the second outlet insert (11d), are configured as noncircular extruded profiles.

7. The heat exchanger according to any of claims 1 to 6, **characterized in that** the first spiral and/or the second spiral is/are wound around a central support having more particularly two bearing shafts (23, 24) spaced apart from each other.

8. The heat exchanger according to any of claims 1 to 7, **characterized in that** the first inlet insert (11a) and the first outlet insert (11 b) are positioned at places opposite each other of the double spiral, the tube elements (20) wound to form the double spiral being coiled in the shape of an arena.

9. The heat exchanger according to any of claims 1 to 8, **characterized in that** the tube elements (20) wound to form the double spiral are combined with a base element (19) and a cover element (14) into a structural unit and are inserted in a housing (13) that is cylindrical at least in sections.

10. The heat exchanger according to any of claims 1 to 9, **characterized in that** the tube elements (20) wound to form the double spiral have assigned to them a housing (13) that is cylindrical at least in sections and in which a gas-liquid separator and/or a collector (12) for the first fluid and/or the second fluid is/are additionally arranged, the first fluid and/or the second fluid being adapted to be realized in particular in the form of a multiphase mixture of a chemically approximately pure medium.

## Revendications

1. Echangeur de chaleur pour le transfert de chaleur entre un premier fluide et un deuxième fluide, comprenant
- un premier raccord d'admission (11 a) pour le premier fluide et
- un premier raccord de sortie (11 b) pour le premier fluide,
- une pluralité d'éléments tubulaires (20) étant agencée entre le premier raccord d'admission (11a) et le premier raccord de sortie (11b), éléments tubulaires (20) qui sont agencés les uns au-dessus des autres en direction axiale et en particulier montés dans la même direction ou en parallèle et peuvent être traversés par le premier fluide en écoulement,
- une première pluralité d'éléments tubulaires (20) s'enroulant autour d'un axe de montage (23, 24) avec au moins un rayon de courbure variable par tronçons à la manière d'une première spirale,
- un deuxième pluralité d'éléments tubulaires (20) s'enroulant autour d'un axe de montage (23, 24) avec au moins un rayon de courbure variable par tronçons à la manière d'une deuxième spirale,
- la deuxième spirale étant agencée à l'intérieur de la première spirale pour former une double spirale,
**caractérisé en ce que**
- en direction axiale entre les éléments tubulaires (20) est formée au moins une cavité (C) qui peut être traversée par le deuxième fluide en écoulement,
- à un nombre d'éléments tubulaires (20) sont associées deux couches thermoconductrices (21) au moyen desquelles est limitée ladite au moins une cavité (C) traversée par le deuxième fluide en écoulement,
- les couches thermoconductrices (21) étant agencées en étant enroulées en forme de spirale avec les éléments tubulaires (20).

2. Echangeur thermique selon la revendication 1, **caractérisé en ce que** la première pluralité d'éléments tubulaires (20) s'étend le long d'un tronçon d'un axe de montage (23, 24), la deuxième pluralité d'éléments tubulaires (20) s'étendant approximativement le long du même tronçon de l'axe de montage (23, 24).

3. Echangeur thermique selon l'une des revendications 1 ou 2, **caractérisé en ce qu'**une couche thermoconductrice (21), en particulier une feuille métallique, est associée au moins à un élément tubulaire (20), la couche thermoconductrice (21) étant agencée dans la spirale en contact thermoconducteur avec l'élément tubulaire (20).

4. Echangeur thermique selon l'une des revendications 1 à 3, **caractérisé en ce qu'**à au moins un élément tubulaire (20) est associée une couche thermoconductrice (22) non métallique et/ou à mauvaise conduction thermique, en particulier une feuille de matière plastique, pour isoler thermiquement l'élément tubulaire (20) et/ou une couche thermoconductrice (21) associée vis-à-vis d'un élément tubulaire voisin et/ou d'une couche thermoconductrice voisine.

5. Echangeur thermique selon l'une des revendications 1 à 4, **caractérisé en ce qu'**il est prévu un deuxième raccord d'admission (11 c) pour le deuxième fluide et un deuxième raccord de sortie (11d) pour le deuxième fluide, lesquels raccords communiquent avec une pluralité de cavités (C) que peut traverser le deuxième fluide en écoulement.

6. Echangeur thermique selon l'une des revendications 1 à 5, **caractérisé en ce qu'**au moins un raccord d'admission (11 a, 11 c) et/ou au moins un raccord de sortie (11b, 11d), en particulier le deuxième raccord d'admission (11c) et le deuxième raccord de sortie (11d) sont réalisés sous forme de profilés extrudés ovalisés.

7. Echangeur thermique selon l'une des revendications 1 à 6, **caractérisé en ce que** la première spirale et/ou la deuxième spirale s'enroulent autour d'un support central avec en particulier deux axes de montage (23, 24) espacés l'un de l'autre.

8. Echangeur thermique selon l'une des revendications 1 à 7, **caractérisé en ce que** le premier raccord d'admission (11a) et le premier raccord de sortie (11b) sont positionnés à des emplacements opposés l'un à l'autre de la double spirale, les éléments tubulaires (20) s'enroulant pour former la double spirale étant enroulés dans la forme d'une arène.

9. Echangeur thermique selon l'une des revendications 1 à 8, **caractérisé en ce que** les éléments tubulaires (20) s'enroulant pour former la double spirale sont réunis avec un élément de fond (19) et avec un élément de couvercle (14) pour former une unité de construction et sont mis en place dans un boîtier (13) cylindrique au moins par tronçons.

10. Echangeur thermique selon l'une des revendications 1 à 9, **caractérisé en ce qu'**aux éléments tubulaires (20) s'enroulant pour former la double spirale est associé un boîtier (13) cylindrique au moins par tronçons, dans lequel est additionnellement agencé un séparateur de gaz-liquide et/ou un collecteur (12) pour le premier fluide et/ou pour le deuxième fluide, le premier fluide et/ou le deuxième fluide pouvant être réalisé en particulier sous forme de mélange de plusieurs phases d'un médium approximativement pur chimiquement.
